# EUROPÄISCHE PATENTSCHRIFT

(11) **EP 1 195 290 B1**
(45) Veröffentlichungstag und Bekanntmachung des Hinweises auf die Patenterteilung: **21.06.2006**
(21) Anmeldenummer: 01121972.2
(22) Anmeldetag: 13.09.2001
(51) Int. Cl.: B60N 2/56, A47C 7/74

(54) **Polster für einen Fahrzeugsitz**
Upholstery for vehicle seat
Capitonnage pour siège de véhicule

(30) Priorität: 06.10.2000 DE 10049458
(43) Veröffentlichungstag der Anmeldung: 10.04.2002
(73) Patentinhaber: DaimlerChrysler AG, 70567 Stuttgart (DE)
(72) Erfinder: Pfahler, Karl, Dr., 70180 Stuttgart (DE)

(56) Entgegenhaltungen:
- DE-A- 10 010 986
- DE-A- 19 745 521
- DE-C- 19 941 715

## Beschreibung

Die Erfindung betrifft ein Polster für einen Fahrzeugsitz gemäß dem Oberbegriff des Patentanspruchs 1.

Bei einem bekannten Polster nach dem Oberbegriff des Anspruchs 1 (DE 197 45 521 A1) ist die luftdurchflutbare Ventilationsschicht aus einem Abstandsgewirk hergestellt, und die Miniaturlüfter sind jeweils in eine zylindrische Hülse eingesetzt, die an ihrem der Ventilationsschicht zugekehrten Stirnende zu einer Tülle ausgeformt ist. Die Tülle weist eine solche Form auf, daß ein Teil des zur Ventilationsschicht geführten Luftstroms in die offene Querschnittsfläche der Ventilationsschicht und der übrige Teil an der Unterseite der Ventilationsschicht in diese eintritt. Jede Hülse ist in einen Belüftungskanal eingesetzt, der eine von einem Polsterträger aufgenommene Schaumstoffauflage durchzieht und einerseits an der Ventilationsschicht und andererseits an der von der Ventilationsschicht abgekehrten Unterseite der Schaumstoffauflage mündet.

Man hat bereits vorgeschlagen, bei einem Polster der eingangs genannten Art (DE 199 41 716.4) die Beschaffenheit der die Miniaturlüfter aufnehmenden Hülsen für eine dicke Ventilationsschicht aus Gummihaar allein oder in Kombination mit einem Gewirke dadurch zu optimieren, daß man die Hülsen in Achs- und Radialrichtung federelastisch ausbildet, z.B. durch Fertigung der Hülsen aus Gummi, und zusätzlich im mittleren Hülsenabschnitt einen Federbalg integriert. Dadurch werden die Miniaturlüfter über die Hülsen kräftefrei im Polster gehalten, wobei die Hülsen im eingesessenen Zustand des Polsters in diesen gleiten können, ohne daß Scherkräfte auf Hülse und Lüftergehäuse wirken. Polster und Hülse können sich bei Sitzbelastung relativ zueinander bewegen, so daß keine Rattergeräusche bei Sitzbeanspruchung entstehen. Durch die Elastizität der Hülse in Längs- und Querrichtung können die Hülsen sowohl bei einer Axialbelastung als auch bei einer Querbelastung des Polsters nachgeben.

Der Erfindung liegt die Aufgabe zugrunde, bei einem Polster mit aktiver Belüftung der eingangs genannten Art eine den weitgehend geräuschlosen Betrieb der Miniaturlüfter gewährleistende Integration der Miniaturlüfter in das Polster auch bei Verwendung einer dünnen Ventilationsschicht aus im Vergleich zu Gummihaar härterem Polstermaterial zu realisieren.

Die Aufgabe ist erfindungsgemäß durch die Merkmale des Patentanspruchs 1 gelöst.

Das erfindungsgemäße Polster hat den Vorteil, daß bei einer aus Platz- und Kostengründen verwendeten dünnen Gewirkeschicht als Ventilationsschicht durch die in die Gewirkeschicht eingesetzten steifen Hülsen einerseits eine optimale Versorgung der Gewirkeschicht mit Luft sichergestellt ist und andererseits bei Polsterbelastung in der relativ steifen Gewirkeschicht auftretende Scherkräfte eine Verformung der in der Gewirkeschicht aufgenommenen Hülsen nicht bewirken können, so daß die Miniaturlüfter von jeder mechanischen Belastung freigehalten werden und es nicht zu Rattergeräuschen oder Ausfall der Belüftung durch Verklemmen der Lüfterräder der Miniaturlüfter kommt. Die bevorzugt aus Kunststoff gefertigten Hülsen weisen trotz ihrer Steifigkeit eine nur geringe Wandstärke auf, so daß sie nicht stark aufbauen und platzsparend und unauffällig in der Gewirkeschicht integriert werden können. Die Langlöcher in dem in der Gewirkeschicht einliegenden Hülsenmantelabschnitt sind dabei so gestaltet, daß sie einerseits eine ausreichende Belüftung der Gewirkeschicht ermöglichen und andererseits eine ausreichende Steifigkeit der Hülse gewährleisten.

Vorteilhaften Ausführungsformen des erfindungsgemäßen Polsters mit zweckmäßigen Weiterbildung und Ausgestaltungen der Erfindung sind in den weiteren Patentansprüchen angegeben.

Die Erfindung ist anhand eines in der Zeichnung dargestellten Ausführungsbeispiels im folgenden näher beschrieben. Es zeigen in prinzipieller Darstellung:
- Fig. 1: einen Längsschnitt eines Sitzteils eines Fahrzeugsitzes,
- Fig. 2: eine vergrößerte perspektivische Darstellung einer der im Polster integrierten Hülsen zur Aufnahme eines Miniaturlüfters.

Ein Fahrzeugsitz weist in bekannter Weise ein am Fahrzeugboden verstellbar gehaltenes Sitzteil und eine Rückenlehne auf, die zur Neigungseinstellang über eine Schwenkrasterung mit dem Sitzteil verbunden ist. Sitzteil und Rückenlehne sind jeweils mit einem Polster ausgestattet.

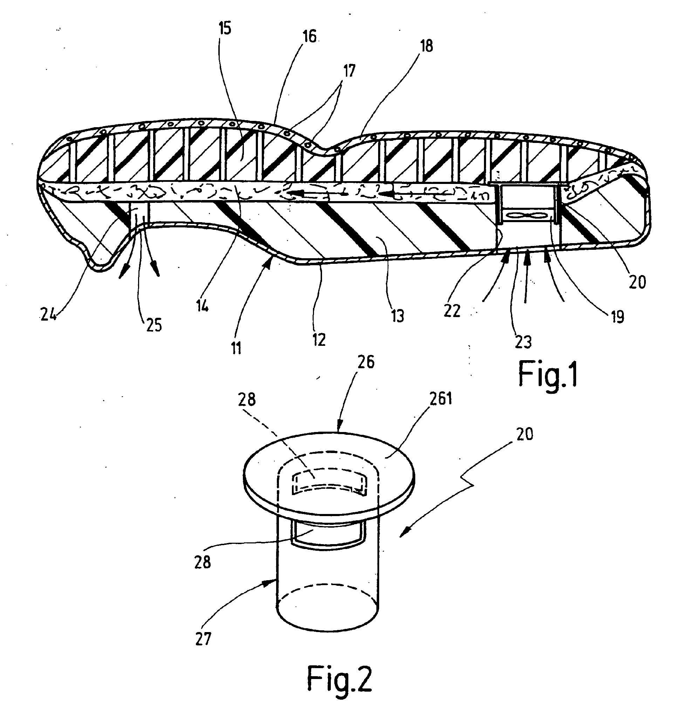

Bei dem in Fig. 1 dargestellten Sitzteil des Fahrzeugsitzes ist das Polster auf einem Polsterträger 11 befestigt, der hier als Sitzschale 12 ausgebildet ist. Das Polster umfaßt einen auf dem Polsterträger 11 aufliegenden Schaumstoffblock 13, eine den Schaumstoffblock 13 ganzflächig überziehende, luftdurchlässige, dünne Gewirkeschicht 14, die als Ventilations- oder Luftführungsschicht der aktiven Belüftung des Polsters dient, eine die Gewirkeschicht 14 überdeckende, gelochte Schaumstoffschicht 15 und einen die Schaumstoffschicht 15 überspannenden, luftdurchlässigen Polsterbezug 16. Zwischen Schaumstoffschicht 15 und Polsterbezug 16 ist eine elektrische Sitzheizung 17 angeordnet, die in einer Bezugsfüllung 18 eingebettet ist.

Zur aktiven Belüftung des Polsters sind in diesem mehrere Miniaturventilatoren oder Miniaturlüfter 19 integriert. In Fig. 1 ist lediglich ein Miniaturlüfter 19 zu sehen, doch sind mehrere Miniaturlüfter 19 in Sitzbreite gesehen mit Abstand nebeneinander angeordnet. Jeder Miniaturlüfter 19 ist mit seinem Lüftergehäuse in einer zylindrischen Hülse 20 aus Kunststoff vibrationsgedämpft aufgehängt, wie sie in Fig. 2 perspektivisch vergrößert dargestellt ist. Die vibrationsgedämpft Aufhängung kann beispielsweise so erfolgen, wie dies in der DE 196 43 760 C1 beschrieben ist. Die Aufhängung des Miniaturlüfters 19 erfolgt an oder nahe dem unteren Ende der Hülse 20, wie dies in Fig. 1 schematisch skizziert ist.

Entsprechend der im Polster einzusetzenden Zahl von Miniaturlüftern 19 sind im hinteren Bereich des Polsters mehrere Belüftungskanäle 22 vorgesehen, die den Schaumstoffblock 13 und die Gewirkeschicht 14 durchziehen und einerseits an der Unterseite des Schaumstoffblocks 13 und andererseits an der von dieser abgekehrten Oberseite der Gewirkeschicht 14 münden. Kongruent mit jedem Belüftungskanal 22 ist in der Sitzschale 12 eine Zuluftöffnung 23 angeordnet. Ferner sind im vorderen Bereich des Polsters Entlüftungskanäle 24 vorgesehen, die den Schaumstoffblock 13 vollständig durchsetzen und einerseits an der dem Schaumstoffblock 13 zugekehrten Unterseite der Gewirkeschicht 14 und andererseits an der von der Gewirkeschicht 14 abgekehrten Unterseite des Schaumstoffblocks 13 münden. Auch hier sind in der Sitzschale 12 mit den Entlüftungskanälen 24 kongruente Abluftöffnungen 25 angeordnet.

Die Belüftungskanäle 22 besitzen einen lichten Durchmesser, der im Bereich der Gewirkeschicht 14 wenig größer ist als der Außendurchmesser der Hülse 20, so daß die Hülse 20 formschlüssig in den Belüftungskanal 22 von der Oberseite der Gewirkeschicht 14 her eingesetzt werden kann. Vorzugsweise wird der Durchmesser des Belüftungskanals 22 im Bereich des Schaumstoffblocks 13 etwas größer gewählt als der Außendurchmesser der Hülse 20, so daß zwischen Hülse 20 und Schaumstoffblock 13 ein ausreichend großes Spiel vorhanden ist.

Wie aus Fig. 2 ersichtlich ist, ist die Hülse 20 an ihrem vom Befestigungsbereich der Miniaturlüfter 19 abgekehrten oberen Ende mit einem Flansch 26 abgeschlossen, der über den Hülsenmantel 27 radial übersteht. Mit diesem ringförmigen Überstehkragen 261 stützt sich die Hülse 20 nach Einsetzen in den Belüftungskanal 22 auf der Oberseite der Gewirkeschicht 14 ab. Nach Auflegen der gelochten Schaumstoffschicht 15 auf die Gewirkeschicht 14 und Spannen des Polsterbezugs 16 ist der Flansch 26 zwischen Schaumstoffschicht 15 und Gewirkeschicht 14 festgelegt und damit die Hülse 20 im Belüftungskanal 22 fixiert. Im Hülsenmantel 27 sind unmittelbar unterhalb des Flansches 26, und zwar in dem in der Gewirkeschicht 14 eingebetteten Hülsenabschnitt, Luftdurchtrittsöffnungen in Form von Langlöchern 28 eingearbeitet, die sich in Umfangsrichtung erstrecken und eine in Achsrichtung der Hülse 20 gemessene Breite aufweisen, die gleich oder kleiner wie die Dicke der Gewirkeschicht 14 ist. Die Langlöcher 28 sind dabei so gestaltet, daß zum einen über sie die Gewirkeschicht 14 maximal mit Luft versorgt werden kann und zum anderen aber die Hülse 20 noch die notwendige mechanische Stabilität besitzt.

Bei Einschalten der Miniaturlüfter 19 zwecks aktiver Belüftung des Polsters saugen die Miniaturlüfter 19 Luft aus dem Bodenraum unterhalb des Sitzteils an und drücken diese über die Langlöcher 28 in die Gewirkeschicht 14 ein. Die Luft strömt durch die Gewirkeschicht 14 und tritt - vornehmlich bei Sitzbelastung - über die Entlüftungskanäle 24 wieder aus. Bei nichtbelegtem Sitzteil strömt ein Teil der Luft über die gelochte Schaumstoffschicht 15 und den luftdurchlässigen Polsterbezug 16 ab, so daß die Polsteroberfläche gekühlt wird.

Das beschriebene Polster ist vornehmlich für den Einsatz im Sitzteil oder Sitzkissen des Fahrzeugsitzes vorgesehen, kann aber ebensogut das Polster der Rückenlehne bilden.

## Patentansprüche

1. Polster für einen Fahrzeugsitz mit einer luftdurchflutbaren Ventilationsschich (14), mit das Polster von der Polsterunterseite bis zu der von der Polsterunterseite abgekehrten Oberseite der Ventilationsschicht (14) durchziehenden Belüftungskanälen (22), mit jeweils in einem der Belüftungskanäle (22) eingesetzten Hülsen (20), die jeweils mit einem an ihrem oberen Ende ausgebildeten Überstehkragen (261) sich auf der Oberseite der Ventilationsschicht (14) abstützen und in ihrem die Ventilationsschicht durchdringenden Hülsenmantelabschnitt Luftdurchtrittsöffnungen aufweisen, und mit Miniaturlüftern (19), die jeweils in einer der Hülsen (20) aufgenommen sind,
**dadurch gekennzeichnet,**
**daß** die Ventilationsschicht ausschließlich von einer dünnen Gewirkeschicht (14) gebildet ist und die Hülsen (20) am oberen Ende abgeschlossen sind sowie in Achs- und Radialrichtung steif ausgebildet sind und daß die Luftdurchtrittsöffnungen im Hülsenmantel (27) von in Umfangsrichtung der Hülse (20) sich erstreckenden Langlöchern (28) gebildet sind, deren in Achsrichtung der Hülse (20) gemessene Lochbreite gleich oder kleiner wie die Schichtdicke der Gewirkeschicht (14) ist.

2. Polster nach Anspruch 1,
**dadurch gekennzeichnet,**
**daß** der Überstehkragen (261) einstückiger Teil eines das obere Ende der Hülsen (20) abschließenden Flansches (26) ist.

3. Polster nach Anspruch 1 oder 2,
**dadurch gekennzeichnet,**
**daß** die Hülsen (20) aus Kunststoff sind.

4. Polster nach einem der Ansprüche 1 - 3,
**dadurch gekennzeichnet,**
**daß** die Gewirkeschicht (14) auf ihrer Oberseite von einer gelochten Schaumstoffschicht (15) überzogen ist, die ihrerseits von einem luftdurchlässigen Polsterbezug (16) überspannt ist.

5. Polster nach Anspruch 4,
**dadurch gekennzeichnet,**
**daß** die Hülsen (20) mittels ihres Flansches (26) zwischen Schaumstoffschicht (15) und Gewirkeschicht (14) eingespannt sind und mit ihrem Zylindermantel (27) mit Spiel in die Belüftungskanäle (22) hineinragen.

6. Polster nach Anspruch 4 oder 5,
**dadurch gekennzeichnet,**
**daß** zwischen Schaumstoffschicht (15) und Polsterbezug (16) eine elektrischen Sitzheizung (17) angeordnet ist.

7. Polster nach einem der Ansprüche 1 - 6,
**dadurch gekennzeichnet,**
**daß** die Gewirkeschicht (14) auf einem von einem Polsterträger (11), vorzugsweise einer Sitzschale (12), aufgenommenen Schaumstoffblock (13) aufliegt und daß die in dem Schaumstoffblock (13) sich fortsetzenden Belüftungskanäle (22) an im Polsterträger (11), vorzugsweise in der Polsterschale (12), ausgebildeten Zuluftöffnungen (23) münden.

8. Polster nach Anspruch 7,
**dadurch gekennzeichnet,**
**daß** die den Schaumstoffblock (13) durchdringenden Kanalabschnitte der Belüftungskanäle (22) einen gegenüber dem Außendurchmesser der Hülsen (20) größeren Innendurchmesser aufweisen.

9. Polster nach einem der Ansprüche 2 - 7,
**dadurch gekennzeichnet,**
**daß** die Miniaturlüfter (19) in den Hülsen (20) an oder nahe deren vom Flansch (26) abgekehrten Ende vibrationsgedämpft aufgehängt sind.

## Claims

1. Upholstery for a vehicle seat, with a ventilation layer (14) through which air can flow, with ventilation ducts (22) passing through the upholstery from the lower side of the upholstery to the upper side of the ventilation layer (14), which side faces away from the lower side of the upholstery, with sleeves (20) which are inserted in each case in one of the ventilation ducts (22), are in each case supported on the upper side of the ventilation layer (14) by a projecting collar (261) formed at their upper end and have air passage openings in their sleeve sheath section which penetrate the ventilation layer, and with miniature fans (19) which are in each case accommodated in one of the sleeves (20), **characterized in that** the ventilation layer is formed exclusively by a thin knitted layer (14), and the sleeves (20) are closed at the upper end and are of stiff design in the axial and radial direction, and **in that** the air passage openings in the sleeve sheath (27) are formed by elongated holes (28) which extend in the circumferential direction of the sleeve (20) and the hole width of which, measured in the axial direction of the sleeve (20), is identical to or smaller than the layer thickness of the knitted layer (14).

2. Upholstery according to Claim 1, **characterized in that** the projecting collar (261) is an integral part of a flange (26) terminating the upper end of the sleeves (20).

3. Upholstery according to Claim 1 or 2, **characterized in that** the sleeves (20) are made from plastic.

4. Upholstery according to one of Claims 1 - 3, **characterized in that** the knitted layer (14) is covered on its upper side by a perforated foam layer (15) which, for its part, is covered by an air-permeable upholstery cover (16).

5. Upholstery according to Claim 4, **characterized in that** the sleeves (20) are clamped by means of their flange (26) between the foam layer (15) and knitted layer (14) and, with their cylinder sheath (27), penetrate with play into the ventilation ducts (22).

6. Upholstery according to Claim 4 or 5, **characterized in that** an electric seat heating system (17) is arranged between the foam layer (15) and upholstery cover (16).

7. Upholstery according to one of Claims 1 - 6, **characterized in that** the knitted layer (14) rests on a foam block (13) held by an upholstery support (11), preferably a seat shell (12), and **in that** the ventilation ducts (22) continuing in the foam block (13) open out at air admission openings (23) formed in the upholstery support (11), preferably in the upholstery shell (12).

8. Upholstery according to Claim 7, **characterized in that** those duct sections of the ventilation ducts (22) which penetrate the foam block (13) have an inside diameter which is larger than the outside diameter of the sleeves (20).

9. Upholstery according to one of Claims 2 - 7, **characterized in that** the miniature fans (19) are suspended in a vibration-damped manner in the sleeves (20) at or in the vicinity of their end which faces away from the flange (26).

## Revendications

1. Capitonnage pour siège de véhicule comprenant une couche de ventilation (14) perméable à l'air, avec des conduits d'aération (22) traversant le capitonnage depuis le côté inférieur du capitonnage jusqu'au côté supérieur de la couche de ventilation (14), opposé au côté inférieur du capitonnage, avec des douilles (20) insérées à chaque fois dans l'un des conduits d'aération (22), qui s'appuient sur le côté supérieur de la couche de ventilation (14) par un bord saillant (261) réalisé sur leur extrémité supérieure et qui présentent dans leur portion d'enveloppe de douille traversant la couche de ventilation, des ouvertures de passage d'air, et avec des ventilateurs miniatures (19) qui sont reçus à chaque fois dans l'une des douilles (20),
**caractérisé en ce que**
la couche de ventilation est formée exclusivement par une couche de tissu à mailles mince (14) et les douilles (20) sont fermées à l'extrémité supérieure et sont également réalisées de manière rigide dans la direction axiale et radiale, et **en ce que** les ouvertures de passage d'air dans l'enveloppe de douille (27) sont formées par des trous oblongs (28) s'étendant dans la direction périphérique de la douille (20), dont la largeur de trou mesurée dans la direction axiale de la douille (20) est inférieure ou égale à l'épaisseur de couche de la couche de tissu à mailles (14).

2. Capitonnage selon la revendication 1,
**caractérisé en ce que**
le bord saillant (261) est une partie réalisée d'une seule pièce d'une bride (26) terminant l'extrémité supérieure des douilles (20).

3. Capitonnage selon la revendication 1 ou 2,
**caractérisé en ce que**
les douilles (20) sont en plastique.

4. Capitonnage selon l'une quelconque des revendications 1 à 3,
**caractérisé en ce que**
la couche de tissu à mailles (14) est recouverte sur son côté supérieur par une couche de mousse perforée (15), qui est recouverte pour sa part par un revêtement de capitonnage (16) perméable à l'air.

5. Capitonnage selon la revendication 4,
**caractérisé en ce que**
les douilles (20) sont tendues au moyen de leur bride (26) entre la couche de mousse (15) et la couche de tissu à mailles (14) et pénètrent avec leur enveloppe cylindrique (27) avec un certain jeu dans les conduits d'aération (22).

6. Capitonnage selon la revendication 4 ou 5,
**caractérisé en ce qu'**un
chauffage de siège (17) est disposé entre la couche de mousse (15) et le revêtement de capitonnage (16).

7. Capitonnage selon l'une quelconque des revendications 1 à 6,
**caractérisé en ce que**
la couche de tissu à mailles (14) repose sur un bloc de mousse (13) reçu par un support de capitonnage (11), de préférence une coque de siège (12), et **en ce que** les conduits d'aération (22) se poursuivant dans le bloc de mousse (13) débouchent dans des ouvertures d'afflux d'air (23) réalisées dans le support de capitonnage (11), de préférence dans la coque de capitonnage (12).

8. Capitonnage selon la revendication 7,
**caractérisé en ce que**
les portions de conduit des conduits d'aération (22) traversant le bloc de mousse (13) présentent un diamètre intérieur plus grand par rapport au diamètre extérieur des douilles (20).

9. Capitonnage selon l'une quelconque des revendications 2 à 7,
**caractérisé en ce que**
les ventilateurs miniatures (19) dans les douilles (20) sont accrochés à ou à proximité de leur extrémité opposée à la bride (26), de manière à amortir les vibrations.
